# EUROPÄISCHE PATENTANMELDUNG

(11) **EP 0 726 686 A2**
(43) Veröffentlichungstag der Anmeldung: **14.08.1996**
(21) Anmeldenummer: 96100264.9
(22) Anmeldetag: 10.01.1996
(51) Int. Cl.: H04Q 7/24, H04Q 7/22

(54) **Mobiles Kommunikationssystem**

(30) Priorität: 13.02.1995 DE 19505490
(71) Anmelder: DeTeWe - Deutsche Telephonwerke Aktiengesellschaft & Co., D-10997 Berlin (DE)
(72) Erfinder: Laurenz, Rudolf, D-14163 Berlin (DE); Precht, Jürgen, D-12107 Berlin (DE)

(57) **Zusammenfassung**

Auf die Infrastruktur eines Mobilfunknetzes, das von einem zentralen Knotenrechner eines Netzbetreibers gesteuert wird, wird eine Diensteanbieter mit in seinem Knotenrechner implementierten Leistungsmerkmalen einer Telekommunikationsanlage aufgesetzt, der über eine Anzahl von Stützpunkten verfügt, die den ständigen Aktualisierungen und der Pflege des Datenbestandes dienen.

## Beschreibung

Die Erfindung betrifft ein Kommunikationssystem auf der Basis von Mobilfunknetzen, die jeweils von einem zentralen Knotenrechner eines Netzbetreibers gesteuert werden.

Herkömmliche Telekommunikationsanlagen (TK-Anlagen) können durch Vernetzen zu einer gemeinsamen Anlage zusammengeschaltet werden. Über lokale Funknetze, die als integrierte Lösung oder als eigenständiges System an einer TK-Anlage zum Einsatz gelangen, werden den Teilnehmern der vernetzten Anlagen eine gewisse Mobilität geboten, so daß sie im Einzugsbereich der Anlagen überall erreichbar sind. Befindet sich ein Teilnehmer außerhalb des Versorgungsbereiches des Funknetzes, kann er nur über z. B. das öffentliche Fernmeldenetz in einem Mobilfunknetz erreicht werden. In diesem Fall benötigt der Teilnehmer ein spezielles Endgerät, z. B. ein Mobilfunktelefon, mit dem er jedoch nicht die Leistungsmerkmale der TK-Anlage nutzen kann. Da diese Kommunikationswege über ein öffentliches Netz geschaltet werden, fallen relativ hohe Gebühren an. Neben der Vielfalt an benötigten Komponenten besteht ein weiterer Nachteil darin, daß auch bei lokalen Funknetzen für eine Infrastruktur gesorgt und ein nicht zu vernachlässigender Aufwand getrieben werden muß, um die Basisstationen mit dem Funkvermittler zu verkabeln.

Daneben sind Mobilfunknetze in Betrieb, die eine große Fläche (D-Netz) oder eine eine große Bevölkerungsdichte (E-Netz) abdecken sollen, z. B. typisch 98 % der Fläche der Bundesrepublik Deutschland bzw. 98 % der Bevölkerung. Mit dem flächendeckenden Netz sind Teilnehmer in ganz Europa erreichbar, während auf das die Bevölkerungsdichte bezogene Netz nur partiell länderübergreifend ist.

Bei derartigen Netzen wird die funktechnische Versorgung von Netzbetreibern zur Verfügung gestellt. Die Netzbetreiber bieten die zeitliche Nutzung (Airtime) Funktelefon-Dienste-Anbietern (Service Provider) an. Die Funktelefon-Dienste-Anbieter stellen die Schnittstelle zum Kunden dar. Sie legen die Tarifierung der Grund- und Gesprächsgebühren fest und bieten spezielle Mehrwertdienste an, wie z. B. Hotelreservierung, Lotsendienste für Autofahrer in Großstädten, Sekretariatsdienste usw. Darüber hinaus verkaufen oder vermieten sie Endgeräte, wie z. B. Mobilfunktelefone.

Der Erfindung lag die Aufgabe zugrunde, dem Mobilfunk die Leistungsmerkmale einer TK-Anlage zur Verfügung zu stellen.

Diese Aufgabe ist durch die Erfindung gelöst, wie sie im Patentanspruch 1 dargelegt ist. Die Unteransprüche stellen weitere vorteilhafte Lösungen dar.

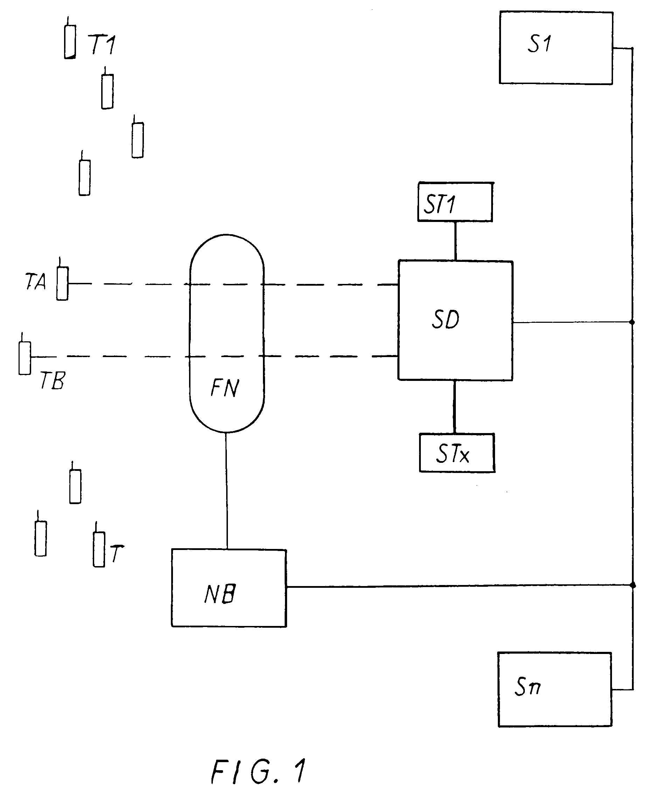

Die Erfindung wird nachfolgend anhand einer aus zwei Figuren bestehenden Zeichnung näher erläutert. Darin zeigen die
- Fig. 1: das Blockschaltbild eines Mobil-TK-Systems mit seinen einzelnen Komponenten und die
- Fig. 2: die funktionellen Strukturen beim Zusammenwirken mehrerer gleichartiger Mobilfunknetze.

Die bekannten, bereits erwähnten Mobilfunknetze FN werden mittels eines zentralen Knotenrechners von Netzbetreibern NB gesteuert. Die Nutzung des Mobilfunkes wird an mehrere Dienste-Anbieter S1 bis Sn vom Netzbetreiber NB in Lizenz vergeben. Diese verschiedenen Dienste-Anbieter S1 bis Sn bieten zudem die zuvor erwähnten Mehrwertdienste an. Die Struktur der Anlage besteht darin, daß ein Teilnehmer, z. B. T1, über seinen Dienste-Anbieter S1 im Funknetz FN mit einem anderen Teilnehmer des gleichen oder eines anderen Funknetzes oder beliebiger TK-Anlagen kommuniziert.

Die Erfindung sieht nun einen Dienste-Anbieter SD vor, der als Mehrwertdienst die Systemleistungsmerkmale einer TK-Anlage zur Verfügung stellt. Hierzu wird in Analogie zu den vorhandenen Dienste-Anbietern S1 bis Sn der Dienste-Anbieter SD mit einem zentralen Knotenrechner installiert, der über eine Anzahl von Stützpunkten ST1 bis STx verfügt. Auf dem Knotenrechner des Dienste-Anbieters SD wird der spezielle Mehrwertdienst "TK-Anlage" implementiert. Die Stützpunkte ST1 bis STx sind über Benutzer-Netzschnittstellen, z. B. X.25, mit dem Dienste-Anbieter SD verknüpft zur Pflege des Datenbestandes, wie z. B. Einrichten, Ändern, Löschen von angeschlossenen TK-Anlagen (Firmen) oder Benutzergruppen.

Den angeschlossenen Mobilteilnehmern TA, TB stehen somit auch die Systemleistungsmerkmale ihrer TK-Anlage zur Verfügung. Dies sind beispielsweise: Gebührenerfassung und -abrechnung, Wahlkontrolle (Amtsberechtigungen), Chef/Sekretär-Funktion, Makeln, Konferenz, Gesprächsübergabe oder Gesprächsübernahme, Rufumleitung, zentraler Rufnummerngeber. Bei eine Modifizierung des Standard-Endgerätes ist auch ein Leitungstasten, ein Andocken von weiteren Endgeräten, z. B. Fax, oder eine Datenübertragung mit geringer Bandbreite möglich.

Durch die Verwendung von zusätzlichen Funk-Relaisstationen können Teilnehmer in abgeschirmten Gebäudeteilen versorgt werden, die dann zum Mobilfunknetz Zugriff erhalten.

Ist in einer konventionellen TK-Anlage eine schnurlose TK-Anschlußeinrichtung auf Basis eines Mobilfunktelefons mit einer analogen Schnittstelle oder und einem ISDN-Basisanschluß vorhanden und ist diese um das Leistungsmerkmal der Nachwahl erweitert, so ist eine Kommunikation zwischen einem drahtgebundenen Teilnehmer der TK-Anlage mit einem Mobilfunkteilnehmer direkt möglich, ohne den Weg über das öffentliche Netz nehmen zu müssen. Das Mobilfunknetz ist damit funktional identisch zu heutigen lokalen Funknetzen, z. B. auf der Basis des DECT-Standards, die entweder als integrierte Lösung oder als eigenständiges System an TK-Anlagen zum Einsatz kommen. Eine solche Hybridlösung liegt dann im Bereich von großen TK-Anlagen.

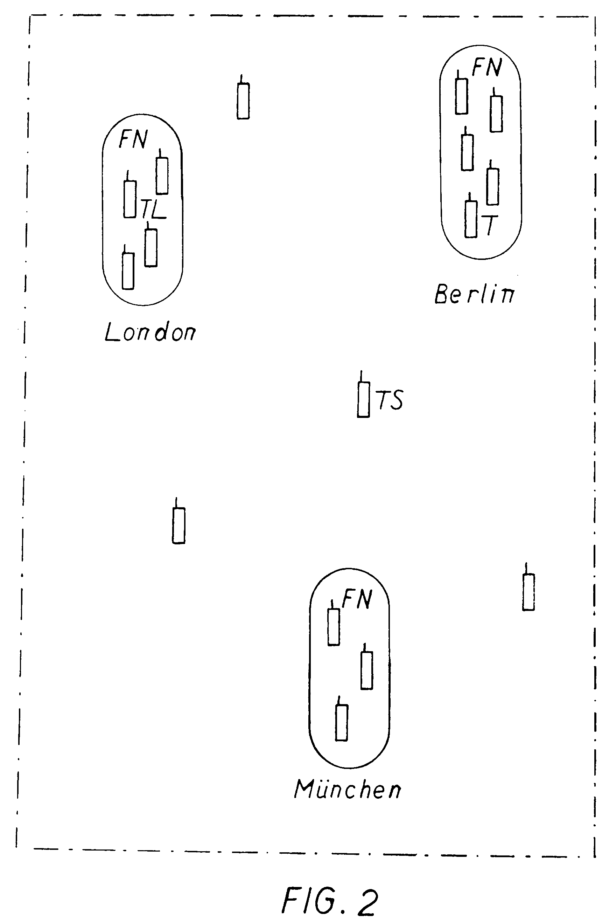

Wie der Figur 2 zu entnehmen ist, ist die Struktur einer auf der Basis eines Mobilfunknetzes aufgebauten TK-Anlage logisch und funktionell eine TK-Anlage.

Ein weiterer Vorteil der Erfindung besteht darin, daß nun unabhängig von seinem momentanen Aufenthaltsort, z. B. an verschiedenen Firmenstandorten, unterwegs oder zu Hause dem Teilnehmer alle Leistungsmerkmale der TK-Anlage zur Verfügung stehen. Ein Teilnehmer TL, der sich z. B. gerade in London befindet, kommuniziert mit einem Teilnehmer T seines Firmenstandortes Berlin auf die gleiche Weise, als hielte er sich in seinem Büro in Berlin auf.

Ein Spezialist TS bei einem Kundengespräch vor Ort kann auf die gleichen Team-Funktionen zurückgreifen, die ihm an seinem Dienstsitz, z. B. in München, zur Verfügung stehen.

## Patentansprüche

1. Kommunikationssystem auf der Basis von Mobilfunknetzen (FN), die jeweils von einem zentralen Knotenrechner eines Netzbetreibers (NB) gesteuert werden, dadurch gekennzeichnet, daß ein Dienste-Anbieter (SB) mit in seinem Knotenrechner implementierten Leistungsmerkmalen einer Telekommunikationsanlage auf die Infrastruktur eines Mobilfunknetzes (FN) aufgesetzt ist, der über eine Anzahl von Stützpunkten (ST1 bis STx) verfügt, die den ständigen Aktualisierungen und der Pflege des Datenbestandes dienen.

2. Kommunikationssystem nach Anspruch 1, dadurch gekennzeichnet, daß die Stützpunkte (ST1 bis STx) über Benutzer-Netzschnittstellen, z. B. X.25-Schnittstellen, mit dem Knotenrechner des Dienste-Anbieters (SD) verbunden sind.

3. Kommunikationssystem nach Anspruch 1, dadurch gekennzeichnet, daß eine am Dienste-Anbieter (SD) angeschlossene konventionelle TK-Anlage mit schnurloser TK-Anschlußeinrichtung mit Nachwahl die Verbindung von drahtgebundenen Teilnehmern der konventionellen TK-Anlage mit Mobilfunkteilnehmer (TA, TB) gestattet.

4. Kommunikationssystem nach Anspruch 1, dadurch gekennzeichnet, daß unabhängig vom Aufenthaltsort jeder Mobilfunkteilnehmer (T, TA, TB, TL, TS) des Dienste-Anbieters (SD) über die Leistungsmerkmale seiner TK-Anlage verfügt.

5. Kommunikationssystem nach Anspruch 1, dadurch gekennzeichnet, daß durch Einsatz von Funk-Relaisstationen Teilnehmer in abgeschirmten Gebäudeteilen versorgt werden.
